# EUROPEAN PATENT SPECIFICATION

(11) **EP 4 418 264 B1**
(45) Date of publication and mention of the grant of the patent: **22.04.2026**
(21) Application number: 23815119.5
(22) Date of filing: 26.05.2023
(51) Int. Cl.: G10L 15/18, G10L 15/22

(54) **SPEECH INTERACTION METHOD AND TERMINAL**
SPRACHINTERAKTIONSVERFAHREN UND ENDGERÄT
PROCÉDÉ D'INTERACTION DE PAROLE ET TERMINAL

(30) Priority: 01.06.2022 CN 202210629293
(43) Date of publication of application: 21.08.2024
(73) Proprietor: Huawei Technologies Co., Ltd., Shenzhen, Guangdong 518129 (CN)
(72) Inventor: CHEN, Kaiji, Shenzhen, Guangdong 518129 (CN); CHEN, Jiasheng, Shenzhen, Guangdong 518129 (CN); SHI, Shuting, Shenzhen, Guangdong 518129 (CN)
(74) Representative: Goddar, Heinz J.
(86) International application number: PCT/CN2023/096683
(87) International publication number: WO 2023/231936

(56) References cited:
- CN-A- 109 360 557
- CN-A- 109 920 436
- KR-A- 20150 066 882
- KR-A- 20210 074 649
- US-A1- 2018 293 221
- US-A1- 2019 355 352
- US-A1- 2020 005 778
- US-A1- 2020 050 426
- TJ TSAI ET AL: "Multimodal addressee detection in multiparty dialogue systems", 2015 IEEE INTERNATIONAL CONFERENCE ON ACOUSTICS, SPEECH AND SIGNAL PROCESSING (ICASSP), 1 April 2015 (2015-04-01), pages 2314 - 2318, XP055307601, ISBN: 978-1-4673-6997-8, DOI: 10.1109/ICASSP.2015.7178384

## Description

### TECHNICAL FIELD

This application relates to the field of human-computer interaction, and in particular, to a voice interaction method and a terminal.

### BACKGROUND

In a voice interaction process, a terminal picks up a voice of a user, converts the voice of the user into text by using an automatic speech recognition (Automatic Speech Recognition, ASR) technology, performs intent recognition on the converted text by using a natural language understanding (Natural Language Understanding, NLU) technology, then executes a skill corresponding to the intent, and returns an execution result to the user.

It may be understood that, in a real processing process of the terminal, there may be a plurality of cases that cause the terminal to finally fail to execute the corresponding skill. For example, the terminal does not recognize the intent of the user; or the terminal has recognized the intent of the user, but the terminal does not support execution of the skill corresponding to the intent. However, for a case in which the terminal finally does not execute the skill corresponding to the intent of the user, currently, the terminal provides a unified reply of "I don't understand". This causes a feeling of inaccurate, unnatural, and unintelligent voice reply to the user. Consequently, voice interaction experience of the user is poor.
US 2020/005778 A1 discloses a dialogue system, a vehicle and a method for controlling the vehicle. The vehicle monitors at least one of vehicle state information and driving environment information, generates a vehicle use pattern based on the monitored information; generates and storing notification event information corresponding to the vehicle use pattern; determines whether the monitored information corresponds to any one of event information; when it is determined that the monitored information corresponds to any one of event information, determines notification timing of the any one of notification event information; when the current time is notification timing of the any one of notification event information, outputs guide information on the notification event information; generates a control command corresponding to the notification event information; and executes a function corresponding the notification event information based on the control command.
Tj Tsai ET AL: "Multimodal addressee detection in multiparty dialogue systems", 2015 IEEE International Conference on Acoustics, Speech and Signal Processing (ICASSP), 1 April 2015, pages 2314-2318, XP055307601, DOI: 10.1109/ICASSP.2015.7178384 ISBN: 978-1-4673-6997-8 discloses a multimodal addressee-detection system to assess the relative importance of various modalities in predicting addressee. In a multiparty human-computer dialogue scenario, acoustic information is found most useful, dominating the other modalities in importance. Lexical and dialog state information are also useful, providing significant performance gains. Visual and beamforming information provide little additional benefit. The results suggest that audio information (both prosodic and lexical) and system state information are a good combination of modalities to use, providing a good balance between performance and economy of implementation.
US 2019/355352 A1 discloses a conversation recognition system on board a vehicle that includes an acoustic sensor component that detects sound in a cabin of the vehicle, a voice recognition component coupled to the acoustic sensor component that analyzes the sound detected by the acoustic sensor component and identifies a plurality of utterances, and a conversation threading unit coupled to the voice recognition component that analyzes the utterances identified by the voice recognition component and identifies a plurality of conversations between a plurality of occupants of the vehicle. The conversation recognition system enables multiple conversations in an environment to be recognized and distinguished from each other.

### SUMMARY

This application provides a voice interaction method and a terminal, to distinguish between more scenarios, provide different response manners based on different scenarios to improve accuracy of an addressee detection result, and make a voice system reply more natural and intelligent.

To achieve the foregoing objectives, embodiments of this application provide the following technical solutions.

According to a first aspect, a voice interaction method of claim 1 is provided. The method includes: detecting a voice signal; converting the voice signal into text, and performing intent recognition on the text, to obtain an intent recognition result; determining an addressee detection result based on one or more of the voice signal, the text, and the intent recognition result, where the addressee detection result includes a source, an object, and a subject that are of the voice signal; and determining a response manner of the voice signal based on the addressee detection result and an intent execution result.

The source of the voice signal includes one of a user, a speaker or an electronic device, and an environment. The object of the voice signal includes one of a voice system, a user, and an environment. The subject of the voice signal includes a task or meaninglessness. Optionally, the task further includes one or more of an execution task, a chat task, an encyclopedia task, and a dialect task.

Optionally, the task may further include the dialect task. In some other examples, the task may be further divided, based on an emotion of the user, into tasks corresponding to different emotions. For example, an excitement emotion corresponds to a task of playing happy music, a tension emotion corresponds to a task of playing soothing light music, and the like.

The intent execution result includes that an intent is successfully executed and an intent is unsuccessfully executed. It should be noted that, in some examples, the intent execution result herein may be a result that a terminal has executed an intent after the terminal requests to execute the intent in the intent recognition result, or an execution result that is fed back by another device to a terminal after the terminal requests the another device to execute the intent. In other words, before the terminal determines the response manner of the voice signal, the intent has been executed. In some other examples, the intent execution result herein may alternatively be that a terminal determines, based on an intent, whether the terminal or another device (for example, a server) supports execution of a skill corresponding to the intent, and a determining result is the intent execution result. In other words, before the terminal determines the response manner of the voice signal, the intent is not executed.

It can be learned that the addressee detection result (the source, the object, and the subject that are of the voice) helps distinguish between different scenarios of the voice, and helps improve a recognition rate of a recognition rejection scenario (for example, a scenario of a human-human dialog, a scenario of playing a sound by the electronic device, a scenario of self-talking of the user, and the like). In addition, based on different scenarios, the voice system may provide different response manners and play different content based on different playing templates. For example, for a case in which the intent is unsuccessfully executed, the voice system may distinguish between specific cases by using the addressee detection result, and provide more information for the user by using different playing content, to improve intelligence of interaction of the voice system, so that human-computer interaction is more natural.

In a possible implementation, the determining a response manner of the voice signal based on the addressee detection result and an intent execution result includes: sending a first prompt when the source of the voice signal is the user, the object of the voice signal is the voice system, the subject of the voice signal is the task, and the intent execution result is that an intent is unsuccessfully executed, where the first prompt is used to prompt that the voice system does not support execution of the subject of the voice signal, and the first prompt includes the source of the voice signal, the object of the voice signal, and the subject of the voice signal; sending a second prompt when the source of the voice signal is the user, the object of the voice signal is the voice system, the subject of the voice signal is the meaninglessness, and the intent execution result is that an intent is unsuccessfully executed, where the second prompt is used to request clarification from the user, and the first prompt includes the source of the voice signal, the object of the voice signal, and the subject of the voice signal; or determining not to respond to the voice signal when the source of the voice signal is a non-user, or the object of the voice signal is a non-voice system.

It can be learned that specific implementations of different response manners in several different scenarios are provided.

In a possible implementation, the determining a response manner of the voice signal based on the addressee detection result and an intent execution result includes: sending a third prompt when the source of the voice signal is the user, the object of the voice signal is another user, and the subject of the voice signal is the chat task, where the third prompt is used to query whether to execute a first skill associated with the voice signal; or sending a fourth prompt when the source of the voice signal is the user, the object of the voice signal is air, and the subject of the voice signal is the chat task, where the fourth prompt is used to query whether to execute a second skill associated with the voice signal, and the second skill is the same as or different from the first skill.

In other words, the voice system may join a dialog between two users, to implement human (a user 1)-human (a user 2)-computer (a voice system) intelligent interaction, thereby improving voice interaction of the user. Alternatively, the voice system may further execute a related skill based on conversation content between the user 1 and the user 2. For example, if the user 1 and the user 2 negotiate to go to a tourist attraction for a tour, the voice system may ask whether information such as weather, a ticket, and a tour guide of the tourist attraction needs to be queried.

The voice system may further interpose in the scenario of self-talking of the user. For example, when the voice received by the voice system is from the user 1, but the object of the voice is air, the subject of the voice signal is the chat task, and the intent execution result is that the intent is unsuccessfully executed, the voice system may also perform interposition. Alternatively, the voice system may further query, based on content of a chat of the user 1, whether to execute a related skill.

It can be learned that, after a subdivided scenario is distinguished based on the addressee detection result (the source, the object, and the subject that are of the voice), the voice system may provide more abundant functions, thereby improving intelligence of human-computer interaction of the voice system.

In a possible implementation, the determining a response manner of the voice signal based on the addressee detection result and an intent execution result includes: querying, according to a preset rule, the response manner corresponding to the addressee detection result and the intent execution result, where the corresponding response manner varies with the addressee detection result or the intent execution result in the rule; or inputting the addressee detection result and the intent execution result to a pre-trained response model for inference, to obtain the response manner of the voice signal.

Therefore, two specific methods for implementing different response manners based on different addressee detection results and intent execution results are provided.

According to the first aspect, the determining an addressee detection result based on one or more of the voice signal, the text, and the intent recognition result includes: inputting the voice signal to a voice recognition model for inference, to obtain a dialog classification corresponding to the voice signal, where the dialog classification includes one of a human-human dialog, a human-computer dialog, an electronic sound, noise, and an unknown sound; inputting the text to a text recognition model for inference, to obtain an initial source value of the voice signal, an initial object value of the voice signal, and an initial subject value of the voice signal; and inputting the dialog classification corresponding to the voice signal, the initial source value of the voice signal, the initial object value of the voice signal, and the initial subject value of the voice signal into a first ensemble learning model for inference, to obtain the source of the voice signal, the object of the voice signal, and the subject of the voice signal. Therefore, a specific implementation of an addressee detection method is provided.

The determining an addressee detection result based on one or more of the voice signal, the text, and the intent recognition result further includes: inputting the voice signal to the voice recognition model for inference, to obtain the dialog classification corresponding to the voice signal, where the dialog classification includes more of the human-human dialog, the human-computer dialog, the electronic sound, the noise, and the unknown sound; inputting the text to the text recognition model for inference, to obtain the initial source value of the voice signal, the initial object value of the voice signal, and the initial subject value of the voice signal; mapping, based on probability distribution that is of each intent corresponding to the text and that is in the intent execution result, to a probability of having an intent and a probability of having no intent that are of the text; and inputting the probability of having an intent and the probability of having no intent that are of the text, the dialog classification corresponding to the voice signal, the initial source value of the voice signal, the initial object value of the voice signal, and the initial subject value of the voice signal into a second ensemble learning model for inference, to obtain the source of the voice signal, the object of the voice signal, and the subject of the voice signal. Therefore, a specific implementation of another addressee detection method is provided.

According to a second aspect, a terminal is provided, including a processor, a memory, and a touchscreen. The memory and the touchscreen are coupled to the processor. The memory is configured to store computer program code. The computer program code includes computer instructions. When the processor reads the computer instructions from the memory, the terminal is enabled to perform the method according to the foregoing aspects and any one of the possible implementations of the foregoing aspects.

According to a third aspect, an apparatus is provided. The apparatus is included in a terminal, and the apparatus has a function of implementing behavior of the terminal in any method according to the foregoing aspects and the possible implementations. The function may be implemented by hardware, or may be implemented by hardware executing corresponding software. The hardware or the software includes at least one module or unit corresponding to the foregoing function, for example, a receiving module or unit, a display module or unit, and a processing module or unit.

According to a fourth aspect, a computer-readable storage medium is provided, including computer instructions. When the computer instructions are run on a terminal, the terminal is enabled to perform the method according to the foregoing aspects and any one of the possible implementations of the foregoing aspects.

According to a fifth aspect, a voice interaction system is provided. The voice system includes one or more processing units. When the one or more processing units execute instructions, the one or more processing units perform the method according to the foregoing aspects and any one of the possible implementations of the foregoing aspects.

According to a sixth aspect, a computer program product is provided. When the computer program product is run on a computer, the computer is enabled to perform the method according to the foregoing aspects and any one of the possible implementations of the foregoing aspects.

According to a seventh aspect, a chip system is provided, including a processor. When the processor executes instructions, the processor performs the method according to the foregoing aspects and any one of the possible implementations of the foregoing aspects.

For technical effects that can be achieved by the terminal provided in the second aspect, the apparatus provided in the third aspect, the computer-readable storage medium provided in the fourth aspect, the voice interaction system provided in the fifth aspect, the computer program product provided in the sixth aspect, and the chip system provided in the seventh aspect, refer to descriptions about the technical effects in the first aspect and any one of the possible implementations in the first aspect. Details are not described herein again.

### BRIEF DESCRIPTION OF DRAWINGS

FIG. 1 is a diagram of a structure of a terminal according to an embodiment of this application;
FIG. 2 is a schematic flowchart of a voice interaction method according to an embodiment of this application;
FIG. 3 is a diagram of a structure of a language system according to an embodiment of this application;
FIG. 4 is a diagram of a structure of a natural language generation module according to an embodiment of this application;
FIG. 5 is a diagram of structures of some addressee detection modules according to an embodiment of this application;
FIG. 6 is a diagram of structures of some other addressee detection modules according to an embodiment of this application;
FIG. 7(1) and FIG. 7(2) are diagrams of structures of some other addressee detection modules according to an embodiment of this application;
FIG. 8(1) and FIG. 8(2) are diagrams of structures of some other addressee detection modules according to an embodiment of this application; and
FIG. 9 is a diagram of a structure of a chip system according to an embodiment of this application.

### DESCRIPTION OF EMBODIMENTS

In the description of embodiments of this application, unless otherwise stated, "/" means "or", for example, A/B may represent A or B. The term "and/or" in this specification describes only an association relationship between associated objects, and indicates that three relationships may exist. For example, A and/or B may represent three cases: Only A exists, both A and B exist, and only B exists.

The following terms "first" and "second" are merely intended for a purpose of description, and shall not be understood as an indication or implication of relative importance or implicit indication of the number of indicated technical features. Therefore, a feature defined with "first" or "second" may explicitly or implicitly include one or more features. In the descriptions of embodiments of this application, unless otherwise specified, "a plurality of" means two or more than two.

In embodiments of this application, the term "example", "for example", or the like is used to represent giving an example, an illustration, or a description. Any embodiment or design described by "example" or "for example" in embodiments of this application should not be construed as being more preferred or advantageous than another embodiment or design. To be precise, the word such as "example" or "for example" is intended to present a related concept in a specific manner.

A voice interaction method provided in embodiments of this application may be applied to a terminal having a voice interaction capability. In some examples, the terminal may install a voice interaction application used to provide the voice interaction capability, for example, a voice assistant, a virtual assistant, or the like on a mobile phone, a voice system on an in-vehicle terminal, and the like. The technical solutions provided in embodiments of this application may be applied to a continuous-dialog voice interaction scenario, a wakeup-free voice interaction scenario, and a full-duplex voice interaction scenario. The continuous-dialog voice interaction scenario means that after waking up a voice interaction application, a user may continuously send a plurality of voice instructions to the voice interaction application within preset duration, and the voice interaction application may complete the plurality of voice instructions. The wakeup-free voice interaction scenario means that a user does not need to say a wakeup word, and a voice interaction application automatically wakes up, automatically picks up a voice instruction of the user, and completes the voice instruction of the user. The voice interaction scenario of a full-duplex dialog is different from a single-round or multi-round continuous voice recognition scenario. The full-duplex dialog may predict, in real time, content to be spoken by a user, generate a response in real time, and control a dialog rhythm, thereby implementing long-distance voice interaction. An application scenario is not specifically limited in embodiments of this application.

For example, the terminal in embodiments of this application may be, for example, a mobile phone, a tablet computer, a personal computer (personal computer, PC), a personal digital assistant (personal digital assistant, PDA), a smartwatch, a netbook, a wearable terminal, an augmented reality (augmented reality, AR) device, a virtual reality (virtual reality, VR) device, a vehicle-mounted device, a smart screen, an intelligent vehicle, a smart speaker, a robot, or the like. A specific form of the terminal is not specially limited in this application.

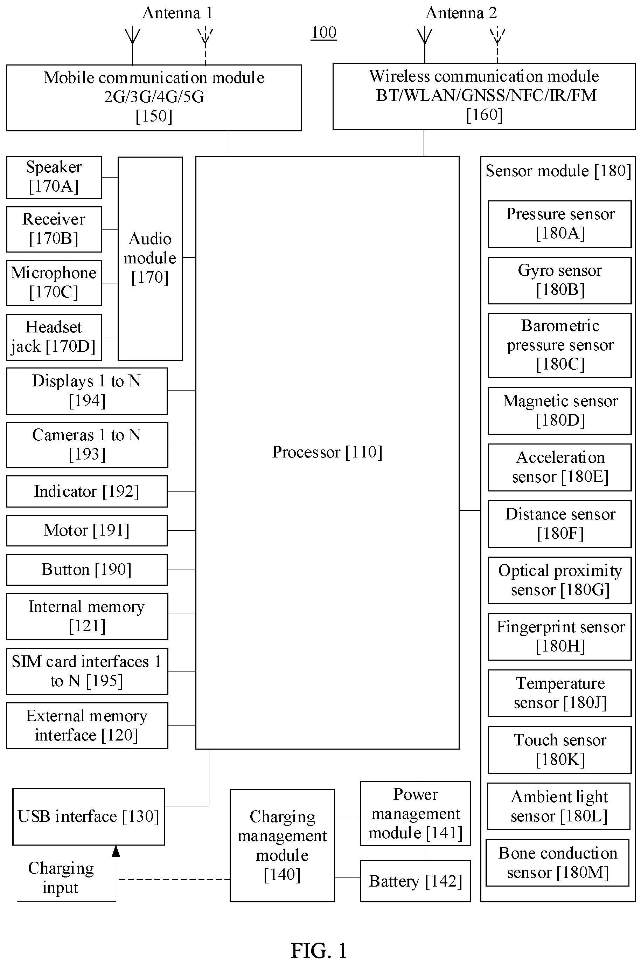

FIG. 1 is a diagram of a structure of a terminal 100.

The terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the terminal 100. In some other embodiments of this application, the terminal 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to control instruction reading and instruction execution.

A memory may be further disposed in the processor 110, and is configured to store instructions and data. In some embodiments, the memory in the processor 110 is a cache memory. The memory may store instructions or data that has been recently used or cyclically used by the processor 110. If the processor 110 needs to use the instructions or the data again, the processor may directly invoke the instructions or the data from the memory. This avoids repeated access, reduces waiting time of the processor 110, and improves system efficiency.

The charging management module 140 is configured to receive a charging input from a charger. The charger may be a wireless charger or a wired charger. In some embodiments in which wired charging is used, the charging management module 140 may receive a charging input from the wired charger through the USB interface 130. In some embodiments of wireless charging, the charging management module 140 may receive a wireless charging input through a wireless charging coil of the terminal 100. When charging the battery 142, the charging management module 140 may further supply power to the terminal by using the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the terminal 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal 100 may be configured to cover one or more communication frequency bands. Different antennas may be multiplexed to improve antenna utilization. For example, the antenna 1 may be multiplexed as a diversity antenna in a wireless local area network. In some other embodiments, the antennas may be used in combination with a tuning switch.

The mobile communication module 150 may provide a wireless communication solution applied to the terminal 100, including 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a voice signal by using an audio device (not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the terminal 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 of the terminal 100 is coupled to the mobile communication module 150, and the antenna 2 is coupled to the wireless communication module 160, so that the terminal 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal 100 implements a display function by using the GPU, the display 194, the application processor, and the like. The GPU is a microprocessor for image processing and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the terminal 100 may include one or N displays 194, where N is a positive integer greater than 1.

The terminal 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and color temperature of a photographing scenario. In some embodiments, the ISP may be disposed in the camera 193.

The camera 193 is configured to capture a still image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to a DSP for processing. The DSP converts the digital image signal into a standard image signal of a format such as RGB or YUV. In some embodiments, the terminal 100 may include one or N cameras 193, where N is a positive integer greater than 1.

The digital signal processor is configured to process a digital signal, and may process another digital signal in addition to the digital image signal. For example, when the terminal 100 selects a frequency, the digital signal processor is configured to perform Fourier transformation on frequency energy.

The video codec is configured to compress or decompress a digital video. The terminal 100 may support one or more video codecs. In this way, the terminal 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the terminal 100 may be implemented through the NPU, for example, image recognition, facial recognition, voice recognition, text understanding, and the like.

The external memory interface 120 may be used to connect to an external memory card, for example, a micro SD card, to extend a storage capability of the terminal 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage region and a data storage region. The program storage region may store an operating system, an application required by at least one function (for example, a sound playing function and an image playing function), and the like. The data storage region may store data (for example, audio data or a phone book) created in a process of using the terminal 100, and the like. In addition, the internal memory 121 may include a high-speed random access memory, and may further include a nonvolatile memory, for example, at least one magnetic disk storage device, a flash storage device, or a universal flash storage (universal flash storage, UFS). The processor 110 runs instructions stored in the internal memory 121 and/or instructions stored in the memory disposed in the processor, to perform various function applications and data processing of the terminal 100.

The terminal 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a voice signal. The terminal 100 may listen to music or answer a call in a hands-free mode by using the speaker 170A.

The receiver 170B, also referred to as an "earpiece", is configured to convert an audio electrical signal into a voice signal. When a call is answered or voice information is received by the terminal 100, the receiver 170B may be put close to a human ear to listen to voice.

The microphone 170C, also referred to as a "mike" or "mic", is configured to convert a voice signal into an electrical signal. When making a call or sending voice information, a user may make a sound by moving a human mouth close to the microphone 170C to input the voice signal to the microphone 170C. At least one microphone 170C may be disposed in the terminal 100. In some other embodiments, two microphones 170C may be disposed in the terminal 100, to collect a voice signal and further implement a noise reduction function. In some other embodiments, three, four, or more microphones 170C may alternatively be disposed in the terminal 100, to collect a voice signal, implement noise reduction, identify a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The button 190 includes a power button, a volume button, and the like. The button 190 may be a mechanical button, or may be a touch button. The terminal 100 may receive a button input, and generate a button signal input related to a user setting and function control of the terminal 100.

The motor 191 may generate a vibration prompt. The motor 191 may be configured to provide an incoming call vibration prompt or a touch vibration feedback. For example, touch operations performed on different applications (for example, photographing and audio playing) may correspond to different vibration feedback effect. The motor 191 may also correspond to different vibration feedback effect for touch operations performed on different areas of the display 194. Different application scenarios (for example, a time reminder, information receiving, an alarm clock, a game, and the like) may also correspond to different vibration feedback effect. A touch vibration feedback effect may be further customized.

The indicator 192 may be an indicator light, and may be configured to indicate a charging status and a power change, or may be configured to indicate a message, a missed call, a notification, and the like.

All technical solutions in the following embodiments may be implemented in the terminal 100 having the foregoing architecture.

The following describes in detail the technical solutions provided in embodiments of this application with reference to the accompanying drawings.

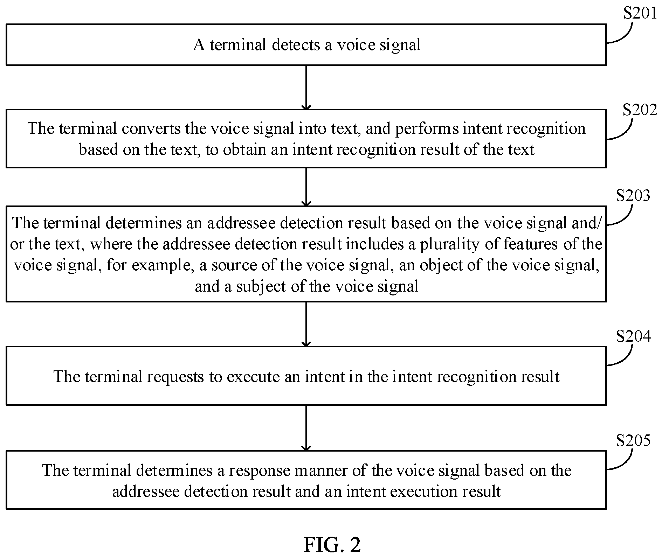

FIG. 2 is a schematic flowchart of a voice interaction method according to an embodiment of this application. The procedure includes the following steps.

S201: A terminal detects a voice signal.

S202: The terminal converts the voice signal into text, and performs intent recognition based on the text to obtain an intent recognition result of the text.

In step S201 to step S202, in some examples of this application, the terminal may install a voice interaction application used to provide a voice interaction capability. For example, a voice assistant, a virtual assistant, or the like on a mobile phone may provide a corresponding service (also referred to as a skill in voice interaction) for a user based on a picked user voice. This skill may be used to operate a function on the mobile phone, request a related service from a server (a third-party skill provider), or the like. For another example, a voice system of an in-vehicle terminal may pick up a voice of a driver or a passenger, provide a vehicle control function and an in-vehicle audio and video entertainment playing function for the driver or the passenger, and request the related service from the server (the third-party skill provider). For another example, voice software of a smart speaker may pick up a voice instruction of a user in a room, and execute the voice instruction of the user, for example, play a related audio and video resource, and control another smart home device by using the smart speaker.

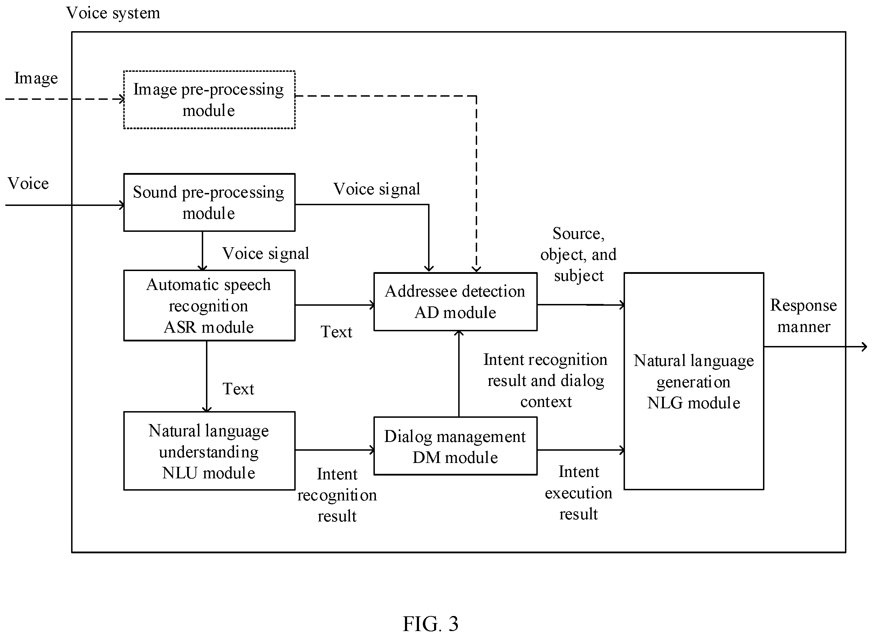

The following uses the voice system installed on the in-vehicle terminal as an example for description. For example, FIG. 3 is a diagram of a software structure of the voice system. Descriptions are made herein with reference to the software structure of the voice system shown in FIG. 3.

After receiving a wakeup word spoken by the user, the in-vehicle terminal enables a sound pickup apparatus (for example, a microphone) to pick up a sound in a vehicle. Alternatively, if the voice system of the in-vehicle terminal is wakeup-free, the in-vehicle terminal always enables the sound pickup apparatus (for example, the microphone) to pick up the sound in the vehicle. The picked sound is input to a sound pre-processing module for pre-processing, for example, including sampling, anti-aliasing filtering, voice enhancement, and the like of the voice signal. The processed voice signal is input to an automatic speech recognition module, and the automatic speech recognition module converts the voice signal into the text. The text is input to a natural language understanding module for intent recognition, to obtain the intent recognition result. The intent recognition result includes an intent and a slot that are recognized for the text. It may be understood that an intent recognition process is essentially a classification result. Therefore, the intent recognition result further includes probability distribution of each intent corresponding to the text.

It may be understood that, in a process in which the terminal picks up the voice of the user (for example, the driver), the terminal may pick up a speaking sound of a surrounding person, a sound played by another electronic device in the vehicle, noise of an environment, and the like. In other words, the terminal may pick up a voice input of a non-target user, and the voice input of the non-target user causes interference to a subsequently recognized user intent, thereby affecting accuracy of executing a user instruction by the voice system. Therefore, in some technical solutions, after recognizing the voice signal as the text, the terminal further performs recognition rejection processing of invalid text on the text, that is, inputs the recognized text to an addressee detection (Addressee Detection, AD) module (also referred to as a recognition rejection module). The addressee detection module outputs a binary classification result, that is, whether the text is a recognition rejection object of the voice system. When it is recognized that the text is the recognition rejection object (that is, an addressee of the voice signal is not the voice system of the in-vehicle terminal), the voice system of the in-vehicle terminal does not respond to the intent of the text. When it is recognized that the text is not the recognition rejection object (that is, the addressee of the voice signal is the voice system of the in-vehicle terminal), the voice system of the in-vehicle terminal executes the intent of the text, and the like. Therefore, after recognition rejection processing is performed on the text, a probability of false recognition of the voice system is reduced, and processing efficiency and correctness of the voice system are improved. However, it may be noted that, in the technical solution, recognition rejection processing is performed based on the text converted from the voice signal by the voice system. Therefore, a voice recognition capability of the voice system directly affects accuracy of the recognition rejection processing.

Therefore, an embodiment of this application further provides a technical solution. A recognized addressee detection result is not a simple binary classification result (that is, whether the text is the recognition rejection object), but includes a plurality of features of the voice signal, including but not limited to a source of the voice signal, an object of the voice signal, and a subject of the voice signal. It may be understood that the plurality of features of the voice signal can improve accuracy of voice recognition. The following step S203 and subsequent steps are performed.

S203: The terminal determines an addressee detection result based on one or more of the voice signal, the text, and the intent recognition result. The addressee detection result includes the plurality of features of the voice signal, for example, the source (from) of the voice signal, the object (to) of the voice signal, and the subject (subject) of the voice signal.

For example, the source of the voice signal includes but is not limited to a user, a speaker, and an environment. When the source of the voice signal is the user, the voice may be confirmed as a human sound. When the source of the voice signal is the speaker, the voice may be determined as a sound emitted by an electronic device, and is a non-human sound. When the source of the voice signal is the environment, the voice may be confirmed as noise. It may be understood that recognizing the source of the voice signal helps distinguish whether the voice is generated by the user, and helps distinguish whether the voice is a recognition rejection object of the voice system. In some examples, a user source of the user may further include a driver, a front passenger, a user in a back row 1, and a user in a back row 2. In this case, the source of the voice signal further helps distinguish a specific user that sends the voice, and subsequently, different response manners may be performed for different users.

The object of the voice signal includes but is not limited to a voice system, a user, and an environment. When the object of the voice signal is the voice system, the voice may be considered as content of human-computer interaction. When the object of the voice signal is the user, the voice may be considered as a conversation between users, and is the recognition rejection object of the voice system. Alternatively, in some other examples, if the voice system supports an interposition function, in this scenario, the voice is not the recognition rejection object of the voice system. When the object of the voice signal is the environment, the voice may be considered as self-talking, singing, or the like of the user, and is the recognition rejection object of the voice system. It may be understood that recognizing a voice dialog helps distinguish whether the addressee of the voice is the voice system, and also helps distinguish whether the voice is the recognition rejection object of the voice system.

The subject of the voice signal includes a task and meaninglessness. The task means that the voice includes that the user expects the voice system to execute a skill. The meaningless means that the voice does not include that the user expects the voice system to execute the skill. In other words, the user does not need the voice system to execute the skill. In some examples, the task may be further divided into an execution task, a chat task, and an encyclopedia task based on a task type. Optionally, the task may further include a dialect task. In some other examples, the task may be further divided, based on an emotion of the user, into tasks corresponding to different emotions. For example, an excitement emotion corresponds to a task of playing happy music, a tension emotion corresponds to a task of playing soothing light music, and the like.

It should be noted that, a feature of the subject of the voice signal may be recognized and extracted based on a meaning of the voice itself. This does not depend on the text recognized by the automatic speech recognition module of the voice system, and does not depend on intent recognition performed by the natural language understanding module on the text. Therefore, a capability of extracting the subject of the voice signal herein does not depend on a recognition capability of the automatic speech recognition module and the natural language understanding module of the voice system.

For example, descriptions are further made herein with reference to the software structure of the voice system shown in FIG. 3. In addition to being input to the automatic speech recognition module, the voice signal output by the sound pre-processing module is also input to the addressee detection module. The addressee detection module is configured to recognize features of the voice, including the source of the voice signal, the object of the voice signal, and the subject of the voice signal. Optionally, the text recognized by the automatic speech recognition module may also be input to the addressee detection module, to recognize the features of the voice. Optionally, the intent recognition result obtained after the natural language understanding module performs intent recognition on the text may alternatively be input to the addressee detection module through a dialog management module, to recognize the features of the voice. Optionally, the dialog management module may further input context of the voice to the addressee detection module, to recognize the features of the voice. Optionally, the voice system may further enable a camera to collect an image of the user, and the image is input to the addressee detection module after passing through an image pre-processing module. The addressee detection module may further recognize the features of the voice based on information about the image. The information about the image includes but is not limited to a quantity of passengers in the vehicle, a face orientation, a person's action, and the like. It may be understood that the voice system may recognize, based on the quantity of passengers in the vehicle, the face orientation, the person's action, and the like, whether a person who is currently speaking talks with another person, is making a call, plays an electronic device, and the like, to recognize the features of the voice. Optionally, the addressee detection module may further recognize the features of the voice based on data (for example, the quantity of passengers, a vehicle speed, and the like) collected by a sensor.

It can be learned that, in this embodiment of this application, the addressee detection module is provided to recognize input multi-modal data (for example, the voice, the text, the intent recognition result, dialog context, image data, sensor data, and the like), to recognize the features of the voice, thereby improving recognition accuracy.

S204: The terminal requests to execute an intent in the intent recognition result.

It should be noted that an execution sequence of step S202 to step S204 is not limited in this embodiment of this application. It may be understood that step S202 to step S204 may be performed in sequence or may be performed in parallel, or some steps are performed in sequence, and some steps are performed in parallel. For example, when converting the voice signal into the text in step S202, the terminal may also simultaneously perform the step of performing addressee detection on the voice signal in step S203. For another example, when performing intent recognition based on the text in step S202, the terminal may also perform the step of determining the addressee detection result for the text in step S203. For another example, after performing step S202 to obtain the intent recognition result, the terminal performs the step of performing addressee detection based on the intent recognition result in step S203, and the terminal may also simultaneously perform step S204 of executing the intent in the intent recognition result. In conclusion, on a premise that the foregoing steps are not contradictory, an execution sequence of step S202 to step S204 may be changed.

S205: The terminal determines a response manner of the voice signal based on the addressee detection result and an intent execution result.

The intent execution result includes that an intent is successfully executed and an intent is unsuccessfully executed. It should be noted that, in some examples, the intent execution result herein may be a result that the terminal has executed the intent after the terminal requests to execute the intent in the intent recognition result, or an execution result that is fed back by another device to the terminal after the terminal requests the another device to execute the intent. In other words, before the terminal determines the response manner of the voice signal, the intent has been executed. In some other examples, the intent execution result herein may alternatively be that the terminal determines, based on the intent, whether the terminal or the another device (for example, a server) supports execution of a skill corresponding to the intent, and a determining result is the intent execution result. In other words, before the terminal determines the response manner of the voice signal, the intent is not executed.

In a conventional technology, if the intent recognition result of the text includes the intent, to be specific, the voice system recognizes the intent, the voice system searches for the skill corresponding to the specific intent from skills supported by the voice system. When the corresponding skill is found, the voice system requests to execute the skill, or the voice system requests another system in the in-vehicle terminal to execute the skill, and the voice system may further request another device (for example, the server) other than the in-vehicle terminal to execute the skill. Then, the voice system feeds back an execution result of the skill to the user. In this scenario, the intent execution result includes that the intent is successfully executed and the intent is unsuccessfully executed. It may be understood that there may be a plurality of cases that cause the voice system to feed back "Intent is unsuccessfully executed" to the user. For example, the natural language understanding module of the voice system recognizes the intent of the user, but the voice system does not support execution of the skill corresponding to the intent; or the natural language understanding module of the voice system recognizes the intent of the user, and requests the server to execute the skill corresponding to the intent, but the server does not respond, or an error occurs when the server executes the skill (for example, slot information is missing, and the like). If the intent recognition result of the text includes no intent, to be specific, the voice system does not recognize the intent, the voice system feeds back "Intent is unsuccessfully executed" to the user. It may be understood that there may be a plurality of cases that cause the voice system to feed back "Intent is unsuccessfully executed" to the user. For example, the natural language understanding module of the voice system does not recognize the intent of the user, the voice collected by the voice system does not include the intent of the user, or the like. In conclusion, in a conventional technology, the voice system feeds back unified "Intent is unsuccessfully executed" (that is, "no result") to the user without distinguishing between specific application scenarios. This causes the user to feel that a voice reply is inaccurate, unnatural, and unintelligent. Consequently, voice interaction experience of the user is poor.

Therefore, an embodiment of this application further provides another response method of the voice system. Different response manners are determined with reference to the recognized addressee detection result (for example, the source of the voice signal, the object of the voice signal, and the subject of the voice signal) and the intent execution result, to feed back different response results to the user. It may be understood that, after the voice system recognizes the plurality of features of the voice signal, the voice system can recognize a more subdivided application scenario, and the voice system can provide different response results based on the more subdivided application scenario, so that intelligence of human-computer interaction and natural smoothness of the voice reply are improved. Therefore, voice interaction experience is improved.

For example, descriptions are further made herein with reference to the software structure of the voice system shown in FIG. 3. The natural language understanding module outputs the intent recognition result, where the intent recognition result includes the recognized intent or no intent. The intent recognition result is input to the dialog management module, and the dialog management module outputs the intent execution result. For example, when the intent recognition result includes the intent, the dialog management module executes the intent, and feeds back the intent execution result to the user. The intent execution result includes that the intent is successfully executed and the intent is unsuccessfully executed. If the intent recognition result is no intent, the intent execution result is that the intent is unsuccessfully executed. Further, the dialog management module inputs the determined intent execution result to a natural language generation module, and the addressee detection module inputs the addressee detection result to the natural language generation module. The natural language generation module determines a final response manner for the voice based on the intent execution result and the features of the plurality of voice signals in the addressee detection result.

In a specific implementation, the in-vehicle terminal uses methods that are based on a rule and a corpus template to implement that response manners in different application scenarios are different. In other words, in the rule, different response manners are set for different application scenarios. Optionally, different corpus templates may be further set for different application scenarios. The corpus template is used by the voice system to play an execution result of the voice to the user, and may also be referred to as a playing template. Alternatively, the corpus template is used by the voice system to present an execution result of the voice to the user in a form of a graphical interface (including text content).

Table 1 shows an example of a correspondence between the addressee detection result (including the source of the voice signal, the object of the voice signal, and the subject of the voice signal), the intent execution result, the response manner, and the playing template.

**Table 1**

| Source of a voice signal | Object of a voice signal | Subject of a voice signal | Intent execution result | Response manner | Broadcasting template |
|---|---|---|---|---|---|
| User 1 | Voice system | Task | Intent is unsuccessfully executed | If the task does not correspond to a skill that can be executed by the voice system, a minimum guarantee manner is used | [Source of the voice signal], [Object of the voice signal] cannot complete your [Subject of the voice signal] request. Please give me time for learning! |
| User 1 | Voice system | Task | Intent is unsuccessfully executed | If the task corresponds to a skill that can be executed by the voice system, a failure prompt manner is used | [Source of the voice signal], [Object of the voice signal] unsuccessfully executes your [Subject of the voice signal] request! |
| User 1 | Voice system | Meaninglessness | Intent is unsuccessfully executed | Request clarification | [Source of the voice signal], [Object of the voice signal] receives your request. Please speak again in another manner! |
| User 1 | Voice system | Task | Intent is successfully executed | Skill 1 | [Source of the voice signal], [Object of the voice signal] has completed a [Subject of the voice signal] request! |
| User 1 | User 2 | Task | Intent is unsuccessfully executed | Do not respond | Do not respond |
| User 1 | Air | Task | Intent is unsuccessfully executed | Do not respond | Do not respond |
| Electronic device | Air | Task | Intent is unsuccessfully executed | Do not respond | Do not respond |

After obtaining the addressee detection result (including the source of the voice signal, the object of the voice signal, and the subject of the voice signal) and the intent execution result, the natural voice generation module may use the addressee detection result and the intent execution result as keywords to search for a corresponding response manner and play template in Table 1. The voice system performs a related operation based on the found response manner, and the voice system parses a playing template corresponding to the scenario. The playing template includes a placeholder and text. Content of the placeholder is filled based on a current voice and context of the current voice, and the filled content and original text in the playing template are combined into final playing text. The voice system plays the text.

For example, when the voice is an execution task requested by the user 1 to the voice system, if the intent execution result is that the intent is unsuccessfully executed, the minimum guarantee response manner is used. In this case, "User 1, the voice system cannot complete your task request. Please give me time for learning!" is played. Alternatively, after it is determined that the intent execution result is that the intent is unsuccessfully executed, the voice system may further determine whether the task corresponds to a skill that can be processed by the voice system. When it is determined that the task does not correspond to a specific skill that can be processed by the voice system, the voice system uses the minimum guarantee response manner. When it is determined that the task corresponds to a specific skill that can be processed by the voice system, the voice system uses the failure prompt response manner, for example, prompting "User 1, the voice system unsuccessfully executes the request of your task!" For another example, the voice is a meaningless voice sent by the user 1 to the voice system, and the intent execution result is that the intent is unsuccessfully executed. In this case, the response manner of requesting clarification is used, and "User 1, the voice system receives your request. Please repeat in another manner!" is played. For another example, when the voice is an execution task requested by the user 1 to the voice system, the voice executes a corresponding intent. If the intent execution result is that the intent is successfully executed, "User 1, the voice system has completed the task!" is played.

When the source of the voice is a non-user, or the object of the voice is a non-voice system, the voice is not responded. For example, when the voice received by the voice system is from the user 1, the object of the voice signal is the user 2, the subject of the voice signal is the task, and the intent execution result is that the intent is unsuccessfully executed, the voice system does not respond. For another example, when the voice received by the voice system is from the user 1, but the object of the voice is the air, the subject of the voice signal is the task, and the intent execution result is that the intent is unsuccessfully executed, the voice system does not respond. For another example, when the voice received by the voice system is from the electronic device, but the object of the voice is the air, the subject of the voice signal is the task, and the intent execution result is that the intent is unsuccessfully executed, the voice system does not respond.

It can be learned that the addressee detection result (the source, the object, and the subject that are of the voice) helps distinguish between different scenarios of the voice, and helps improve a recognition rate of a recognition rejection scenario (for example, a scenario of a human-human dialog, a scenario of playing a sound by the electronic device, a scenario of self-talking of the user, and the like). In addition, based on different scenarios, the voice system may provide different response manners and play different content based on different playing templates. For example, for a case in which the intent is unsuccessfully executed, the voice system may distinguish between specific cases by using the addressee detection result, and provide more information for the user by using different playing content, to improve intelligence of interaction of the voice system, so that human-computer interaction is more natural.

In some other examples, different subjects of the voice signal may be further set based on requirements of different scenarios. For example, the tasks is further divided into an execution task, a chat task, and an encyclopedia task. Table 2 shows another example of a correspondence between the addressee detection result (including the source of the voice signal, the object of the voice signal, and the subject of the voice signal), the intent execution result, the response manner, and the playing template.

**Table 2**

| Source of a voice signal | Object of a voice signal | Subject of a voice signal | Intent execution result | Response manner | Broadcasting template |
|---|---|---|---|---|---|
| User 1 | Voice system | Execution task | Intent is successfully executed | Skill 1 | [Source of the voice signal], [Object of the voice signal] has completed your [Subject of the voice signal] request. |
| User 1 | Voice system | Execution task | Intent is unsuccessfully executed | Minimum grantee | [Source of the voice signal], [Object of the voice signal] cannot complete your [Subject of the voice signal] request. Please give me time for learning! |
| User 1 | User 2 | Execution task | Intent is unsuccessfully executed | Do not respond | Do not respond |
| User 1 | User 2 | Chat task | Intent is unsuccessfully executed | Interposition | Interposition |
| User 1 | Air | Chat task | Intent is unsuccessfully executed | Interposition | Interposition |

For example, when the voice is the execution task requested by the user 1 to the voice system, if the intent execution result is that the intent is successfully executed, "User 1, the voice system has completed your task request" is played. For example, when the voice is the execution task requested by the user 1 to the voice system, if the intent execution result is that the intent is unsuccessfully executed, the minimum guarantee response manner is used. In this case, "User 1, the voice system cannot complete your task request. Please give me time for learning!" is played.

For another example, when the voice received by the voice system is from the user 1, the object of the voice signal is the user 2, the subject of the voice signal is the execution task, and the intent execution result is that the intent is unsuccessfully executed, the voice system does not respond. For another example, when the voice received by the voice system is from the user 1, the object of the voice signal is the user 2, the subject of the voice signal is the chat task, and the intent execution result is that the intent is unsuccessfully executed, the voice system may perform interposition. For example, the voice system may join a dialog between the user 1 and the user 2, to implement human (the user 1)-human (the user 2)-computer (the voice system) intelligent interaction, thereby improving voice interaction of the user. Alternatively, the voice system may further execute a related skill based on conversation content between the user 1 and the user 2. For example, if the user 1 and the user 2 negotiate to go to a tourist attraction for a tour, the voice system may ask whether information such as weather, a ticket, and a tour guide of the tourist attraction needs to be queried.

For another example, when the voice received by the voice system is from the user 1, but the object of the voice is the air, the subject of the voice signal is the chat task, and the intent execution result is that the intent is unsuccessfully executed, the voice system may also perform interposition. Alternatively, the voice system may further query, based on content of a chat of the user 1, whether to execute a related skill.

It can be learned that, after a subdivided scenario is distinguished based on the addressee detection result (the source, the object, and the subject that are of the voice), the voice system may provide more abundant functions, thereby improving intelligence of human-computer interaction of the voice system.

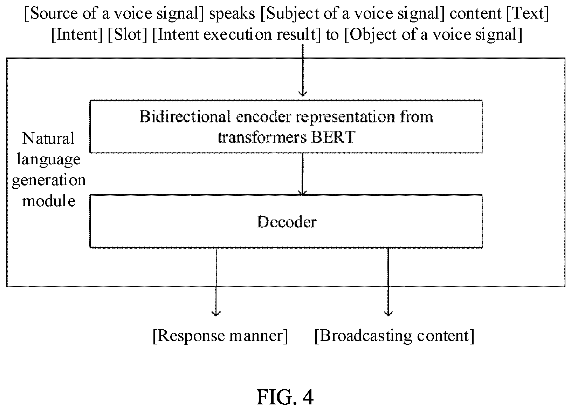

In another specific implementation, the in-vehicle terminal may further implement that response manners in different application scenarios are different based on a machine learning method. To be specific, a model of a natural language generation module is trained by using the machine learning method. Specifically, a pre-trained language model is used as an encoder, for example, a bidirectional encoder representation from transformers (Bidirectional Encoder Representation from Transformers, BERT) model is used as the encoder. A large quantity of training samples are input to the encoder for training, for example, training is performed in an autoregression manner, to obtain the natural language generation module. The training sample may be content of corpus-response that is written and received by a developer or that is generated by a machine based on a specific rule. The corpus is a voice, and the developer labels each voice. Labeled content includes a source, an object, a subject that are of the voice, text converted from the voice, a recognized intent, a slot, an intent execution result, and a response manner. The developer may manually perform labeling, or may input the voice to the model shown in FIG. 3. The addressee detection module recognizes features of the source, the object, and the subject of the voice. The automatic speech recognition module converts the voice into the text. The natural language understanding module recognizes the intent and the slot of the text. The dialog management module outputs the intent execution result. A desired response manner and playing content are determined, and the voice is labeled. It may be understood that the natural language generation module obtained by training the foregoing training samples may implement that response manners (and playing content) in different application scenarios are different. FIG. 4 shows an example of the natural language generation module obtained after training. After parameters such as the source, the object, the subject that are of the voice, the text converted from the voice, the recognized intent, the slot, and the intent execution result are input to the natural language generation module, the natural language generation module outputs responded response manner and playing content after running. It can be learned that more diversified and more flexible response manners and playing content can be implemented by using a capability of a pre-trained language model, thereby improving intelligence of human-computer interaction.

The following describes in detail implementation of the addressee detection module in the voice system.

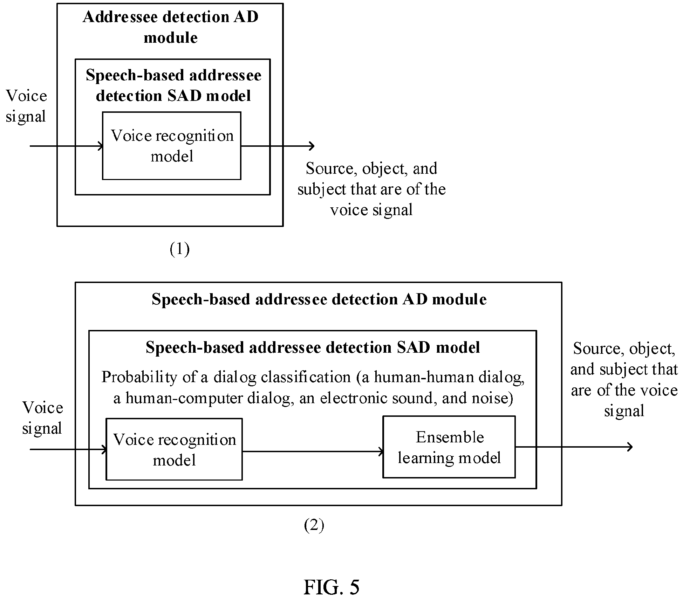

In some examples, the addressee detection module includes a speech-based addressee detection (Speech-based Addressee Detection, SAD) model. In other words, the voice-based addressee detection model receives a voice signal processed by a sound pre-processing module, recognizes the voice signal, and recognizes a plurality of features of the voice signal, such as a source of the voice signal, an object of the voice signal, and a subject of the voice signal. In a implementation, as shown in (1) in FIG. 5, the voice-based addressee detection model includes a voice recognition model. The voice recognition model is, for example, a Transformer voice recognition model, or more specifically, a convolution-augmented Transformer for speech recognition (Convolution-augmented Transformer for Speech Recognition, Conformer) model. When the voice recognition model is trained, a training sample may be input to a pre-trained model for training. The training sample includes a voice, and a source, an object, a subject, and the like that are labeled for the voice. It should be noted that a labeling person may label the source, the object, and the subject that are of the voice based on a meaning of the voice. Subsequently, the trained voice recognition model performs inference on the input voice, to infer features such as the source, the object, and the subject that are of the voice. It may be understood that, a feature of the subject of the voice signal is recognized and extracted based on the meaning of the voice itself. This does not depend on the text recognized by the automatic speech recognition module of the voice system, and does not depend on intent recognition performed by the natural language understanding module on the text. Therefore, a capability of extracting the subject of the voice signal herein does not depend on a recognition capability of the automatic speech recognition module and the natural language understanding module of the voice system.

In another implementation, as shown in (2) in FIG. 5, the voice-based addressee detection model may include a voice recognition model (for example, the Transformer voice recognition model) and an ensemble learning model. When the voice recognition model is trained, a training sample may be input to a pre-trained model. The training sample includes a voice, and a dialog classification labeled for the voice. The dialog classification includes, for example, more of a human-human dialog, a human-computer dialog, an electronic sound (that is, a sound played by an electronic device), noise, and an unknown sound. It should be noted that a labeling person may label the dialog classification based on a meaning of the voice. Subsequently, the trained voice recognition model performs inference on the input voice, to obtain probability distribution of each dialog classification corresponding to the voice. When the ensemble learning model is trained, the training sample may be input to a pre-trained ensemble learning model. The training sample includes the probability distribution of each dialog classification corresponding to the voice, and the labeled source, object, subject, and the like that are of the voice. The trained ensemble learning model may perform inference on the probability distribution of the dialog classification of the input voice, to infer the source, the object, the subject, and the like that are of the voice. In other words, after the voice is input to the voice-based addressee detection model, features such as the source, the object, and the subject that of the voice may be obtained through inference of the voice recognition model and the ensemble learning model.

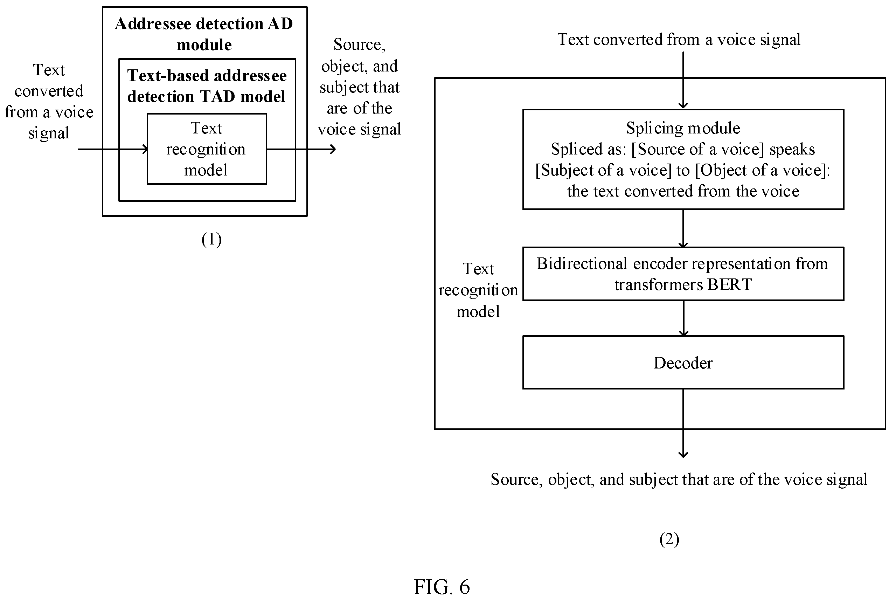

In some other examples, the addressee detection module includes a text-based addressee detection (Text-based Addressee Detection, TAD) model. In other words, as shown in (1) in FIG. 6, the text-based addressee detection model receives text converted by an automatic speech recognition module, and recognizes a plurality of features of a voice signal by recognizing the text, for example, a source of the voice signal, an object of the voice signal, and a subject of the voice signal. In a specific implementation, as shown in (2) in FIG. 6, the text-based addressee detection model includes a text recognition model, and the text recognition model includes a splicing module, a BERT encoder, and a decoder. The splicing module is configured to splice text converted from a voice and a preset template. The preset template includes a plurality of prompts, and one prompt corresponds to one feature of one voice. For example, the source, object, and subject that are of the voice signal. For example, spliced content is "[Source of the voice signal] speaks [Subject of the voice signal] to [Object of the voice signal]: the text converted from the voice". When the text recognition model is trained, a training sample may be input to a pre-trained model for training. The training sample includes the text converted from the voice, and the source, the object, the subject, and the like that are of the voice and that are labeled for the text. The trained text recognition model may perform inference on the text converted from the voice, to infer features such as the source, the object, and the subject that are of the voice.

In some other examples, as shown in (2) in FIG. 6, the addressee detection model includes the voice-based addressee detection model, the text-based addressee detection model, and the ensemble learning model. For the voice-based addressee detection model, refer to the voice recognition model shown in (1) in FIG. 5, and for the text-based addressee detection model, refer to the text recognition models shown in (1) and (2) in FIG. 6. Details are not described herein again. The ensemble learning model may fuse recognition results of the voice-based addressee detection model and the text-based addressee detection model, and finally output features such as the source, the object, and the subject of the voice.

It should be noted that, because data features of a voice and text are different. The voice is streaming data, and is a group of data sequences that arrive sequentially, in a large quantity, quickly, and continuously. The text is non-streaming data. Therefore, when the recognition results of the voice-based addressee detection model and the text-based addressee detection model are fused, a voice stream may be cut into a plurality of voice segments by using a voice activity detection (Voice Activity Detection, VAD) method. Each voice segment is input to the voice-based addressee detection model for recognition, and text corresponding to the voice segment is input to a recognition result of the text-based addressee detection model, to achieve effect of aligning the voice and the text. Two corresponding recognition results are fused.

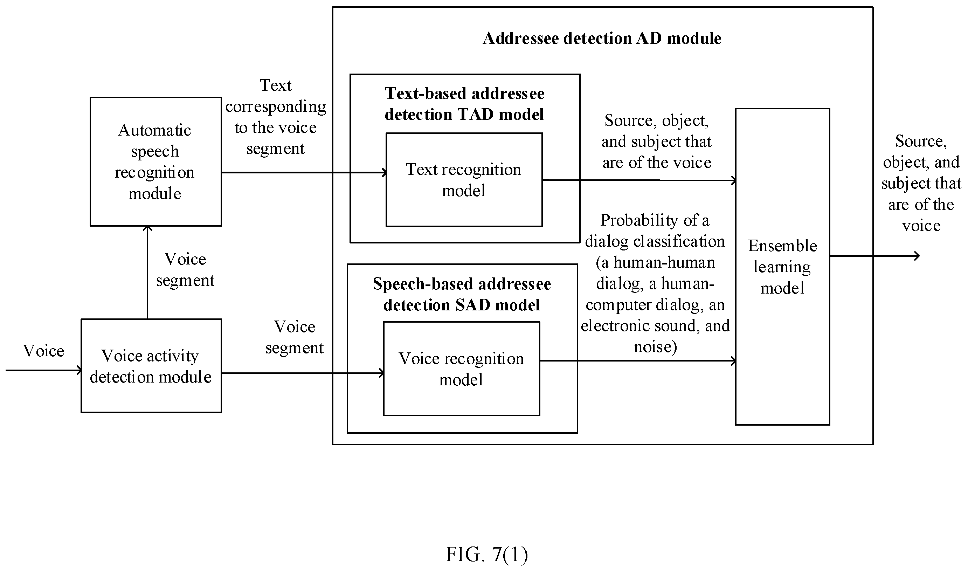

In a specific implementation, as shown in FIG. 7(1), a voice system includes one voice activity detection module. After receiving a voice, the voice activity detection module cuts an audio stream into a plurality of voice segments. Then, each voice segment is input to a voice-based addressee detection model for recognition, to output a probability of a dialog classification corresponding to each voice segment. In addition, text converted from each voice segment is input to a text-based addressee detection model for recognition, to output a source, an object, a subject, and the like that are of a voice signal corresponding to each voice segment. It may be noted that, in this case, the voice segment processed by the voice-based addressee detection model is aligned with the text processed by the text-based addressee detection model. Then, recognition results output by the two models are input to an ensemble learning model for inference, to obtain a source, an object, a subject, and the like that are of a fused voice.

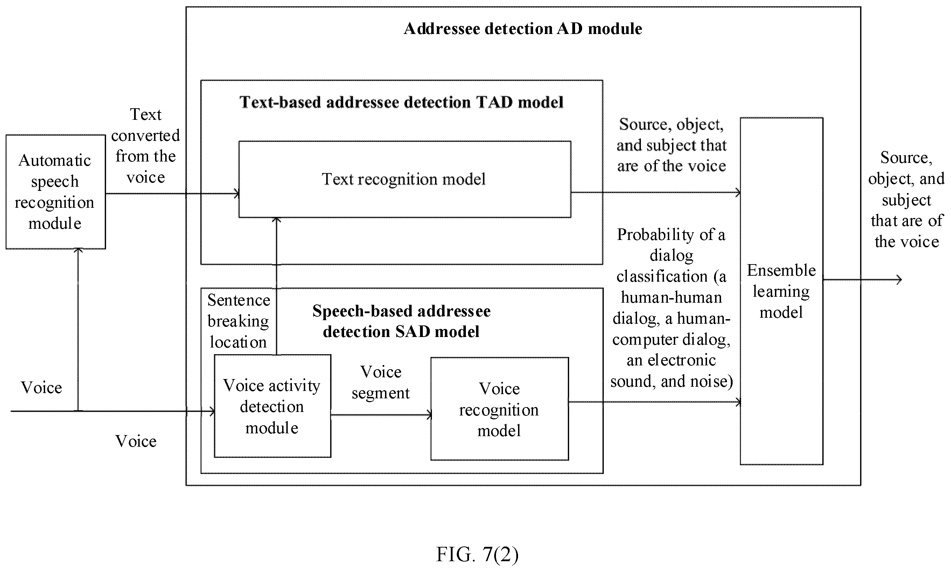

In another specific implementation, as shown in FIG. 7(2), the voice-based addressee detection model includes the voice activity detection module. Specifically, after the voice-based addressee detection model receives a voice stream, the voice activity detection module in the voice-based addressee detection model cuts the audio stream into a plurality of voice segments, and sends a sentence breaking location to the text-based addressee detection model. The sentence breaking location is used to trigger the text-based addressee detection model to recognize corresponding text content. In this case, the voice segment processed by the voice-based addressee detection model is aligned with the text processed by the text-based addressee detection model. Then, recognition results output by the two models are input to an ensemble learning model for inference, to obtain a source, an object, a subject, and the like that are of a fused voice.

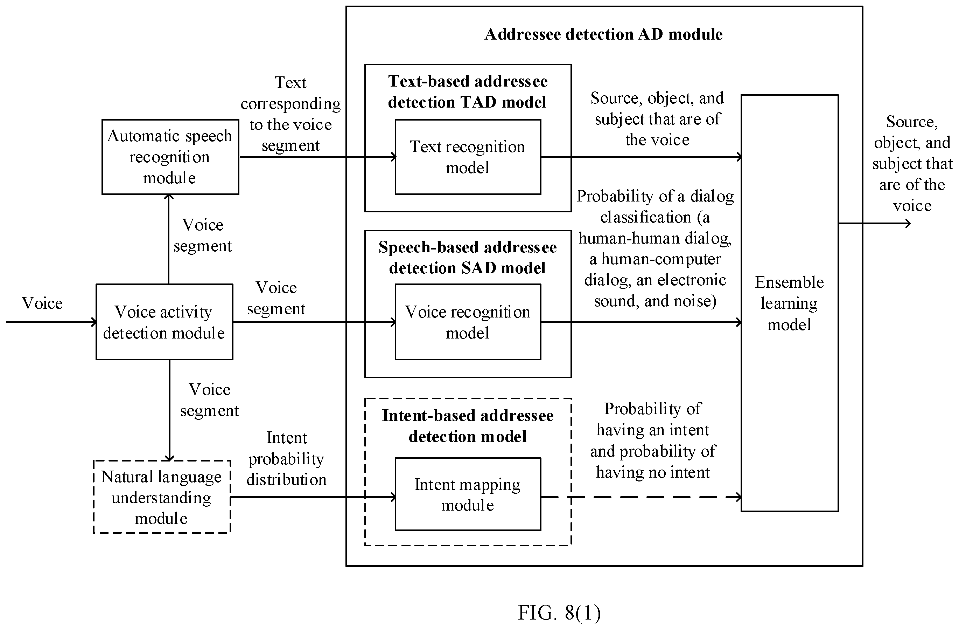

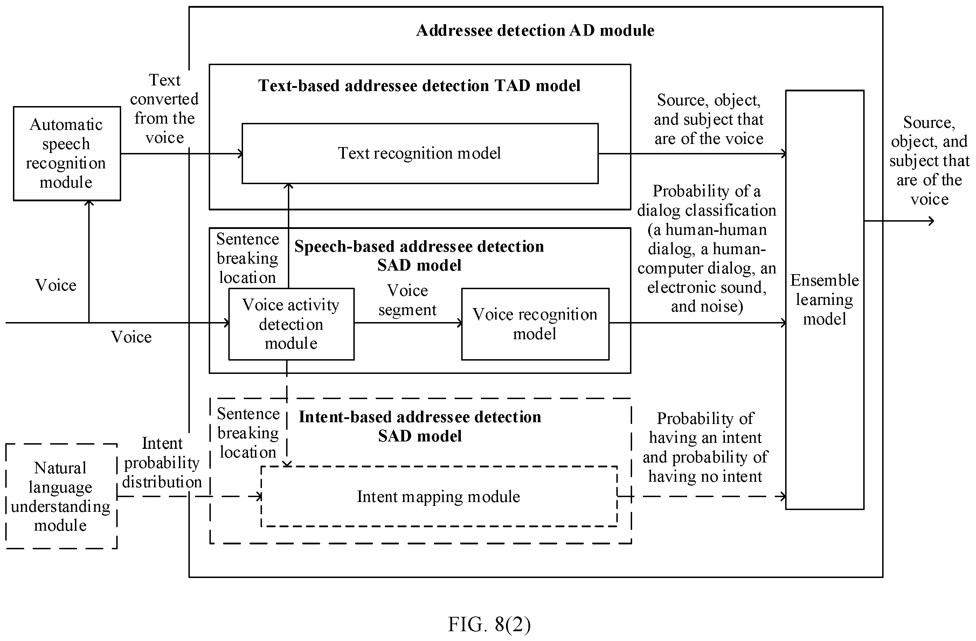

In some other examples, as shown in FIG. 8(1) or FIG. 8(2), the addressee detection model further includes an intent-based addressee detection model. The intent-based addressee detection model includes an intent mapping module, configured to map intent probability distribution of a voice output by a natural language understanding module to a probability of having an intent and a probability of having no intent. For example, after a voice 1 is input to the natural language understanding module, intention probability distribution of the voice 1 is obtained as follows: a probability of an intent 1 is a probability 1, a probability of an intent 2 is a probability 2, a probability of an intent 3 is a probability 3, and a probability of having no intent is a probability 4. In this case, the probability of having an intent after mapping of the intent mapping module is the probability 1 + the probability 2 + the probability 3, and the probability of having no intent is the probability 4. It can be learned that the intent-based addressee detection model helps improve a subject of a recognized voice signal. Then, the ensemble learning model may fuse a recognition result of the voice-based addressee detection model, a recognition result of the text-based addressee detection model, and a recognition result of the intent-based addressee detection model, and finally output features such as a source, an object, and a subject that are of a voice. Optionally, in some other examples, a dialog management module may further input context of the voice to the intent-based addressee detection model, to assist in outputting the features such as the source, the object, and the subject that are of the voice.

It may be understood that, the voice activity detection module may still be used to align text processed by the intent-based addressee detection model, a voice processed by the voice-based addressee detection model, and text processed by the text-based addressee detection model. For a specific alignment manner, refer to the foregoing alignment method of the voice processed by the voice-based addressee detection model and the text processed by the text-based addressee detection model. Details are not described herein again.

It should be noted that a specific implementation of the addressee detection module is not specifically limited in this embodiment of this application. For example, the addressee detection module may further include an image addressee detection module, configured to recognize, by using an image of a user, a feature of a voice corresponding to the image. The addressee detection module may further include any combination of the foregoing sub-models (the voice recognition model, the text recognition model, the intent-based addressee detection model, an image recognition model, and the like). For example, the addressee detection module may include the voice-based addressee detection model and the intent-based addressee detection model, include the text-based addressee detection model and the intent-based addressee detection model, or the like.

In conclusion, in this embodiment of this application, the addressee detection module recognizes input multi-modal data (for example, a voice, text, an intent recognition result, dialog context, image data, sensor data, and the like), and a recognition result includes a plurality of features of a voice signal. It may be understood that the plurality of features of the voice signal help improve addressee detection accuracy, and further help distinguish between more application scenarios, so that a voice system provides different response results based on more subdivided application scenarios, thereby improving intelligence of human-computer interaction, natural smoothness of a voice reply, and voice interaction experience.

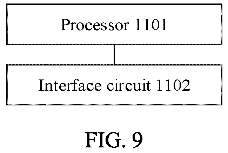

An embodiment of this application further provides a chip system. As shown in FIG. 9, the chip system includes at least one processor 1101 and at least one interface circuit 1102. The processor 1101 and the interface circuit 1102 may be interconnected by using a line. For example, the interface circuit 1102 may be configured to receive a signal from another apparatus (for example, a memory in a terminal 100). For another example, the interface circuit 1102 may be configured to send a signal to another apparatus (for example, the processor 1101). For example, the interface circuit 1102 may read instructions stored in the memory, and send the instructions to the processor 1101. When the instructions are executed by the processor 1101, a terminal may be enabled to perform steps performed by the terminal 100 (for example, a mobile phone) in the foregoing embodiments. Certainly, the chip system may further include another discrete device. This is not specifically limited in this embodiment of this application.

An embodiment of this application further provides an apparatus. The apparatus is included in a terminal, and the apparatus has a function of implementing behavior of the terminal in any method in the foregoing embodiments. The function may be implemented by hardware, or may be implemented by hardware executing corresponding software. The hardware or the software includes at least one module or unit corresponding to the foregoing function, for example, a detection module or unit, a display module or unit, a determining module or unit, and a calculation module or unit.

An embodiment of this application further provides a computer storage medium, including computer instructions. When the computer instructions are run on a terminal, the terminal is enabled to perform any method in the foregoing embodiments.

An embodiment of this application further provides a computer program product. When the computer program product runs on a computer, the computer is enabled to perform any method in the foregoing embodiments.

It may be understood that to implement the foregoing functions, the terminal includes corresponding hardware structures and/or corresponding software modules for performing the functions. It should be readily appreciated by a person skilled in the art that the example units, algorithms, and steps described with reference to the embodiments disclosed in this specification can be implemented in the embodiments of this application by using hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of the present invention.

In the embodiments of this application, the terminal or the like may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that in embodiments of the present invention, module division is an example, and is merely a logical function division. During actual implementation, another division manner may be used.

The foregoing descriptions about implementations allow a person skilled in the art to understand that, for the purpose of convenient and brief description, division of the foregoing functional modules is taken as an example for illustration. During actual application, the foregoing functions can be allocated to different modules and implemented based on a requirement, that is, an inner structure of an apparatus is divided into different functional modules to implement all or some of the functions described above. For a detailed workflow of the foregoing system, apparatus, and unit, refer to a corresponding process in the foregoing method embodiments, and details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. The protection scope of this application shall be subject to the protection scope of the claims.

## Claims

1. A voice interaction method, wherein the method comprises:
detecting (S201) a voice signal;
converting (S202) the voice signal into text, and performing intent recognition on the text, to obtain an intent recognition result;
determining (S203) an addressee detection result based on one or more of the voice signal, the text, and the intent recognition result, wherein the addressee detection result comprises a source, an object, and a subject that are of the voice signal; and
determining (S205) a response manner of the voice signal based on the addressee detection result and an intent execution result,
**characterized in that** the determining an addressee detection result based on one or more of the voice signal, the text, and the intent recognition result comprises:
inputting the voice signal to a voice recognition model for inference, to obtain a dialog classification corresponding to the voice signal, wherein the dialog classification comprises one of a human-human dialog, a human-computer dialog, an electronic sound, noise, and an unknown sound;
inputting the text to a text recognition model for inference, to obtain an initial source value of the voice signal, an initial object value of the voice signal, and an initial subject value of the voice signal; and
inputting the dialog classification corresponding to the voice signal, the initial source value of the voice signal, the initial object value of the voice signal, and the initial subject value of the voice signal to a first ensemble learning model for inference, to obtain the source of the voice signal, the object of the voice signal, and the subject of the voice signal.

2. The method according to claim 1, wherein the source of the voice signal comprises one of a user, a speaker or an electronic device, and an environment; the object of the voice signal comprises one of a voice system, a user, and an environment; and the subject of the voice signal comprises a task or meaninglessness.

3. The method according to claim 2, wherein the task further comprises one or more of an execution task, a chat task, an encyclopedia task, and a dialect task.

4. The method according to claim 2 or 3, wherein the determining a response manner of the voice signal based on the addressee detection result and an intent execution result comprises:
sending a first prompt when the source of the voice signal is the user, the object of the voice signal is the voice system, the subject of the voice signal is the task, and the intent execution result is that an intent is unsuccessfully executed, wherein the first prompt is used to prompt that the voice system does not support execution of the subject of the voice signal, and the first prompt comprises the source of the voice signal, the object of the voice signal, and the subject of the voice signal;
sending a second prompt when the source of the voice signal is the user, the object of the voice signal is the voice system, the subject of the voice signal is the meaninglessness, and the intent execution result is that an intent is unsuccessfully executed, wherein the second prompt is used to request clarification from the user, and the second prompt comprises the source of the voice signal, the object of the voice signal, and the subject of the voice signal; or
determining not to respond to the voice signal when the source of the voice signal is a non-user, or the object of the voice signal is a non-voice system.

5. The method according to claim 3, wherein the determining a response manner of the voice signal based on the addressee detection result and an intent execution result comprises:
sending a third prompt when the source of the voice signal is the user, the object of the voice signal is another user, and the subject of the voice signal is the chat task, wherein the third prompt is used to query whether to execute a first skill associated with the voice signal; or
sending a fourth prompt when the source of the voice signal is the user, the object of the voice signal is air, and the subject of the voice signal is the chat task, wherein the fourth prompt is used to query whether to execute a second skill associated with the voice signal, and the second skill is the same as or different from the first skill.

6. The method according to any one of claims 1 to 5, wherein the determining a response manner of the voice signal based on the addressee detection result and an intent execution result comprises:
querying, according to a preset rule, the response manner corresponding to the addressee detection result and the intent execution result, wherein the corresponding response manner varies with the addressee detection result or the intent execution result in the rule; or
inputting the addressee detection result and the intent execution result to a pre-trained response model for inference, to obtain the response manner of the voice signal.

7. The method according to any one of claims 1 to 6, wherein the determining an addressee detection result based on one or more of the voice signal, the text, and the intent recognition result further comprises:
inputting the voice signal to the voice recognition model for inference, to obtain the dialog classification corresponding to the voice signal, wherein the dialog classification comprises more of the human-human dialog, the human-computer dialog, the electronic sound, the noise, and the unknown sound;
inputting the text to the text recognition model for inference, to obtain the initial source value of the voice signal, the initial object value of the voice signal, and the initial subject value of the voice signal;
mapping, based on probability distribution that is of each intent corresponding to the text and that is in the intent execution result, to a probability of having an intent and a probability of having no intent that are of the text; and
inputting the probability of having an intent and the probability of having no intent that are of the text, the dialog classification corresponding to the voice signal, the initial source value of the voice signal, the initial object value of the voice signal, and the initial subject value of the voice signal to a second ensemble learning model for inference, to obtain the source of the voice signal, the object of the voice signal, and the subject of the voice signal.

8. A terminal, comprising a processor, a memory, and a touchscreen, wherein the memory and the touchscreen are coupled to the processor, the memory is configured to store computer program code, the computer program code comprises computer instructions, and when the processor reads the computer instructions from the memory, the terminal is enabled to perform the voice interaction method according to any one of claims 1 to 7.

9. A computer-readable storage medium, comprising computer instructions, wherein when the computer instructions are run on a terminal, the terminal is enabled to perform the voice interaction method according to any one of claims 1 to 7.

10. A voice interaction or chip system, comprising one or more processing units, wherein when the one or more processing units execute instructions, the one or more processing units perform the voice interaction method according to any one of claims 1 to 7.

## Patentansprüche

1. Sprachinteraktionsverfahren, wobei das Verfahren Folgendes umfasst:
Detektieren (S201) eines Sprachsignals;
Umwandeln (S202) des Sprachsignals in Text und Durchführen einer Absichtserkennung an dem Text, um ein Absichtserkennungsergebnis zu erhalten;
Bestimmen (S203) eines Adressatendetektierungsergebnisses, basierend auf einem oder mehreren von dem Sprachsignal, dem Text und dem Absichtserkennungsergebnis, wobei das Adressatendetektierungsergebnis eine Quelle, ein Objekt und einen Betreff umfasst, die zu dem Sprachsignal gehören; und
Bestimmen (S205) einer Art und Weise der Beantwortung des Sprachsignals, basierend auf dem Adressatendetektierungsergebnis und einem Absichtserkennungsergebnis,
**dadurch gekennzeichnet, dass** das Bestimmen eines Adressatendetektierungsergebnisses basierend auf einem oder mehreren des Sprachsignals, des Texts und des Absichtserkennungsergebnisses Folgendes umfasst: Eingeben des Sprachsignals in ein Spracherkennungsmodell zwecks Inferenz, um eine Dialogklassifizierung zu erhalten, die dem Sprachsignal entspricht, wobei die Dialogklassifizierung eines von einem Mensch-Mensch-Dialog, einem Mensch-Computer-Dialog, einem elektronischen Ton, Geräusch und einem unbekannten Ton umfasst;
Eingeben des Texts in ein Texterkennungsmodell zwecks Inferenz, um einen anfänglichen Quellenwert des Sprachsignals, einen anfänglichen Objektwert des Sprachsignals und einen anfänglichen Betreffwert des Sprachsignals zu erhalten; und Eingeben der Dialogklassifizierung, die dem Sprachsignal entspricht, des anfänglichen Quellenwertes des Sprachsignals, des anfänglichen Objektwertes des Sprachsignals und des anfänglichen Betreffwertes des Sprachsignals in ein erstes Ensemblelernmodul zwecks Inferenz, um die Quelle des Sprachsignals, das Objekt des Sprachsignals und den Betreff des Sprachsignals zu erhalten.

2. Verfahren nach Anspruch 1, wobei die Quelle des Sprachsignals eines von einem Benutzer, einem Lautsprecher oder einem elektronischen Gerät und eine Umgebung umfasst; das Objekt des Sprachsignals eines von einem Sprachsystem, einem Benutzer und einer Umgebung umfasst; und der Betreff des Sprachsignals eine Aufgabe oder Bedeutungslosigkeit umfasst.

3. Verfahren nach Anspruch 2, wobei die Aufgabe ferner eines oder mehreres von einer Ausführungsaufgabe, einer Chat-Aufgabe, einer Enzyklopädieaufgabe und einer Dialektaufgabe umfasst.

4. Verfahren nach Anspruch 2 oder 3, wobei das Bestimmen einer Art und Weise der Beantwortung des Sprachsignals, basierend auf dem Adressatendetektierungsergebnis und einem Absichtserkennungsergebnis, Folgendes umfasst:
Senden eines ersten Benutzerhinweises, wenn die Quelle des Sprachsignals der Benutzer ist, das Objekt des Sprachsignals das Sprachsystem ist, der Betreff des Sprachsignals die Aufgabe ist und das Absichtserkennungsergebnis darin besteht, dass eine Absicht nicht erfolgreich ausgeführt wurde, wobei der erste Benutzerhinweis verwendet wird, um darauf hinzuweisen, dass das Sprachsystem die Ausführung des Betreffs des Sprachsignals nicht unterstützt, und der erste Benutzerhinweis die Quelle des Sprachsignals, das Objekt des Sprachsignals und den Betreff des Sprachsignals umfasst;
Senden eines zweiten Benutzerhinweises, wenn die Quelle des Sprachsignals der Benutzer ist, das Objekt des Sprachsignals das Sprachsystem ist, der Betreff des Sprachsignals die Bedeutungslosigkeit ist und das Absichtserkennungsergebnis darin besteht, dass eine Absicht nicht erfolgreich ausgeführt wurde, wobei der zweite Benutzerhinweis verwendet wird, um eine Klärung vom Benutzer anzufordern, und der zweite Benutzerhinweis die Quelle des Sprachsignals, das Objekt des Sprachsignals und den Betreff des Sprachsignals umfasst; oder
Bestimmen, das Sprachsignal nicht beantworten, wenn die Quelle des Sprachsignals ein Nicht-Benutzer ist oder das Objekt des Sprachsignals ein Nicht-Sprachsystem ist.

5. Verfahren nach Anspruch 3, wobei das Bestimmen einer Art und Weise der Beantwortung des Sprachsignals, basierend auf dem Adressatendetektierungsergebnis und einem Absichtserkennungsergebnis, Folgendes umfasst:
Senden eines dritten Benutzerhinweises, wenn die Quelle des Sprachsignals der Benutzer ist, das Objekt des Sprachsignals ein anderer Benutzer ist und der Betreff des Sprachsignals die Chat-Aufgabe ist, wobei der dritte Benutzerhinweis verwendet wird, um abzufragen, ob eine erste Fähigkeit auszuführen ist, die dem Sprachsignal zugeordnet ist, oder
Senden eines vierten Benutzerhinweises, wenn die Quelle des Sprachsignals der Benutzer ist, das Objekt des Sprachsignals Luft ist und der Betreff des Sprachsignals die Chataufgabe ist, wobei der vierte Benutzerhinweis verwendet wird, um abzufragen, ob eine zweite Fähigkeit auszuführen ist, die dem Sprachsignal zugeordnet ist, und die zweite Fähigkeit gleich der ersten Fähigkeit ist oder sich von dieser unterscheidet.

6. Verfahren nach einem der Ansprüche 1 bis 5, wobei das Bestimmen einer Art und Weise der Beantwortung des Sprachsignals, basierend auf dem Adressatendetektierungsergebnis und einem Absichtserkennungsergebnis, Folgendes umfasst:
Abfragen der Art und Weise der Beantwortung, die dem Adressatendetektierungsergebnis und dem Absichtserkennungsergebnis entspricht, gemäß einer voreingestellten Regel, wobei die entsprechende Art und Weise der Beantwortung mit dem Adressatendetektierungsergebnis oder dem Absichtserkennungsergebnis in der Regel variiert; oder
Eingeben des Adressatendetektierungsergebnisses und des Absichtserkennungsergebnisses in ein vortrainiertes Beantwortungsmodell zur Inferenz, um die Art und Weise der Beantwortung des Sprachsignals zu erhalten.

7. Verfahren nach einem der Ansprüche 1 bis 6, wobei das Bestimmen eines Adressatendetektierungsergebnisses, basierend auf einem oder mehreren von dem Sprachsignal, dem Text und dem Absichtserkennungsergebnis, Folgendes umfasst:
Eingeben des Sprachsignals in das Spracherkennungsmodell zwecks Inferenz, um die Dialogklassifizierung zu erhalten, die dem Sprachsignal entspricht, wobei die Dialogklassifizierung eines oder mehrere von dem Mensch-Mensch-Dialog, dem Mensch-Computer-Dialog, dem elektronischen Ton, dem Geräusch und dem unbekannten Ton umfasst;
Eingeben des Texts in das Texterkennungsmodell zwecks Inferenz, um den anfänglichen Quellwert des Sprachsignals, den anfänglichen Objektwert des Sprachsignals und den anfänglichen Betreffwert des Sprachsignals zu erhalten;
Abbilden auf eine Wahrscheinlichkeit, dass eine Absicht vorliegt, und eine Wahrscheinlichkeit, dass keine Absicht vorliegt, die zu dem Text gehören, basierend auf einer Wahrscheinlichkeitsverteilung, die zu jeder Absicht gehört, die dem Text entspricht, und die in dem Absichtsausführungsergebnis ist; und
Eingeben der Wahrscheinlichkeit, dass eine Absicht vorliegt, und der Wahrscheinlichkeit, dass keine Absicht vorliegt, die zu dem Text gehören, der Dialogklassifizierung, die dem Sprachsignal entspricht, des anfänglichen Quellwertes des Sprachsignals, des anfänglichen Objektwertes des Sprachsignals und des anfänglichen Betreffwertes des Sprachsignals in ein zweites Ensemblelernmodell zwecks Inferenz, um die Quelle des Sprachsignals, das Objekt des Sprachsignals und den Betreff des Sprachsignals zu erhalten.

8. Endgerät, einen Prozessor, einen Speicher und einen Touchscreen umfassend, wobei der Speicher und der Touchscreen mit dem Prozessor gekoppelt sind, der Speicher dafür konfiguriert ist, Computerprogrammcode zu speichern, der Computerprogrammcode Computeranweisungen umfasst, und wenn der Prozessor die Computeranweisungen aus dem Speicher liest, das Endgerät in die Lage versetzt wird, das Sprachinteraktionsverfahren nach einem der Ansprüche 1 bis 7 durchzuführen.

9. Computerlesbares Speichermedium, Computeranweisungen umfassend, wobei, wenn die Computeranweisungen auf einem Endgerät abgearbeitet werden, das Endgerät in die Lage versetzt wird, das Sprachinteraktionsverfahren nach einem der Ansprüche 1 bis 7 durchzuführen.

10. Sprachinteraktions- oder Chipsystem, eine oder mehrere Verarbeitungseinheiten umfassend, wobei, wenn die eine oder mehreren Verarbeitungseinheiten Anweisungen ausführen, die eine oder mehreren Verarbeitungseinheiten das Sprachinteraktionsverfahren nach einem der Ansprüche 1 bis 7 durchführen.

## Revendications

1. Procédé d'interaction vocale, le procédé comprenant les étapes suivantes :
détecter (S201) un signal vocal ;
convertir (S202) le signal vocal en texte, et effectuer une reconnaissance de l'intention du texte, afin d'obtenir un résultat de reconnaissance d'intention ;
déterminer (S203) un résultat de détection du destinataire sur la base d'un ou plusieurs des éléments suivants : le signal vocal, le texte et le résultat de reconnaissance d'intention, le résultat de détection du destinataire comprenant une source, un objet et un sujet qui sont ceux du signal vocal ; et
déterminer (S205) un mode de réponse du signal vocal sur la base du résultat de détection du destinataire et d'un résultat d'exécution d'intention,
**caractérisé en ce que** la détermination d'un résultat de détection du destinataire sur la base d'un ou plusieurs éléments parmi le signal vocal, le texte et le résultat de reconnaissance d'intention comprend les étapes suivantes :
entrer le signal vocal dans un modèle de reconnaissance vocale pour inférence, afin d'obtenir une classification de dialogue correspondant au signal vocal, où la classification de dialogue comprend l'un parmi un dialogue humain-humain, un dialogue humain-ordinateur, un son électronique, un bruit et un son inconnu ;
entrer, pour inférence, le texte dans un modèle de reconnaissance de texte, afin d'obtenir une valeur source initiale du signal vocal, une valeur objet initiale du signal vocal et une valeur sujet initiale du signal vocal ; et
entrer la classification du dialogue correspondant au signal vocal, la valeur source initiale du signal vocal, la valeur objet initiale du signal vocal et la valeur sujet initiale du signal vocal dans un premier modèle d'apprentissage en ensemble pour inférence, afin d'obtenir la source du signal vocal, l'objet du signal vocal et le sujet du signal vocal.

2. Procédé selon la revendication 1, dans lequel la source du signal vocal comprend l'un parmi un utilisateur, un locuteur ou un dispositif électronique, et un environnement ; l'objet du signal vocal comprend l'un parmi un système vocal, un utilisateur et un environnement ; et le sujet du signal vocal comprend une tâche ou une absence de sens.

3. Procédé selon la revendication 2, dans lequel la tâche comprend en outre une ou plusieurs tâches parmi une tâche d'exécution, une tâche de chat, une tâche d'encyclopédie et une tâche de dialecte.

4. Procédé selon la revendication 2 ou la revendication 3, dans lequel la détermination d'un mode de réponse du signal vocal sur la base du résultat de détection du destinataire et d'un résultat d'exécution d'intention comprend les étapes suivantes :
envoyer une première invite lorsque la source du signal vocal est l'utilisateur, l'objet du signal vocal est le système vocal, le sujet du signal vocal est la tâche, et le résultat d'exécution d'intention est qu'une intention n'est pas exécutée avec succès, où la première invite est utilisée pour indiquer que le système vocal ne prend pas en charge l'exécution du sujet du signal vocal, et la première invite comprend la source du signal vocal, l'objet du signal vocal et le sujet du signal vocal ;
envoyer une deuxième invite lorsque la source du signal vocal est l'utilisateur, l'objet du signal vocal est le système vocal, le sujet du signal vocal est l'absence de sens, et le résultat d'exécution d'intention est que l'intention n'est pas exécutée avec succès, où la deuxième invite est utilisée pour demander des éclaircissements à l'utilisateur, et la deuxième invite comprend la source du signal vocal, l'objet du signal vocal et le sujet du signal vocal ; ou
déterminer de ne pas répondre au signal vocal lorsque la source du signal vocal est un non-utilisateur ou que l'objet du signal vocal est un système non vocal.

5. Procédé selon la revendication 3, dans lequel la détermination d'un mode de réponse du signal vocal sur la base du résultat de détection du destinataire et d'un résultat d'exécution d'intention comprend les étapes suivantes :
envoyer une troisième invite lorsque la source du signal vocal est l'utilisateur, l'objet du signal vocal est un autre utilisateur et le sujet du signal vocal est la tâche de chat, la troisième invite étant utilisée pour demander s'il convient d'exécuter une première compétence associée au signal vocal ; ou
envoyer une quatrième invite lorsque la source du signal vocal est l'utilisateur, l'objet du signal vocal est l'air et le sujet du signal vocal est la tâche de chat, la quatrième invite étant utilisée pour demander s'il convient d'exécuter une deuxième compétence associée au signal vocal, et la deuxième compétence étant identique ou différente de la première compétence.

6. Procédé selon l'une quelconque des revendications 1 à 5, dans lequel la détermination d'un mode de réponse du signal vocal sur la base du résultat de détection du destinataire et d'un résultat d'exécution d'intention comprend les étapes suivantes :
interroger, selon une règle prédéfinie, le mode de réponse correspondant au résultat de détection du destinataire et au résultat d'exécution d'intention, où le mode de réponse correspondant varie en fonction du résultat de détection du destinataire ou du résultat d'exécution d'intention dans la règle ; ou
entrer, pour inférence, le résultat de détection du destinataire et le résultat d'exécution d'intention dans un modèle de réponse pré-entraîné, afin d'obtenir le mode de réponse du signal vocal.

7. Procédé selon l'une quelconque des revendications 1 à 6, dans lequel la détermination d'un résultat de détection du destinataire sur la base d'un ou de plusieurs des éléments suivants : le signal vocal, le texte et le résultat de reconnaissance d'intention, comprend en outre les étapes suivantes :
entrer le signal vocal dans le modèle de reconnaissance vocale à des fins d'inférence, afin d'obtenir la classification du dialogue correspondant au signal vocal, la classification du dialogue comprenant plusieurs cas parmi un dialogue homme-homme, un dialogue homme-machine, un son électronique, un bruit et un son inconnu ; entrer, pour inférence, le texte dans le modèle de reconnaissance de texte, afin d'obtenir la valeur source initiale du signal vocal, la valeur objet initiale du signal vocal et la valeur sujet initiale du signal vocal ;
mettre en correspondance, sur la base de la distribution de probabilité de chaque intention correspondant au texte et figurant dans le résultat d'exécution d'intention, une probabilité de présence d'une intention et une probabilité d'absence d'intention pour le texte ; et
entrer la probabilité de présence d'une intention et la probabilité d'absence d'intention pour le texte, la classification du dialogue correspondant au signal vocal, la valeur source initiale du signal vocal, la valeur objet initiale du signal vocal et la valeur sujet initiale du signal vocal dans un deuxième modèle d'apprentissage en ensemble à des fins d'inférence, afin d'obtenir la source du signal vocal, l'objet du signal vocal et le sujet du signal vocal.

8. Terminal comprenant un processeur, une mémoire et un écran tactile, où la mémoire et l'écran tactile sont couplés au processeur, la mémoire est configurée pour stocker un code de programme informatique, le code de programme informatique comprend des instructions informatiques et, lorsque le processeur lit les instructions informatiques à partir de la mémoire, le terminal est activé pour exécuter le procédé d'interaction vocale selon l'une quelconque des revendications 1 à 7.

9. Support de stockage lisible par ordinateur, comprenant des instructions informatiques, où, lorsque les instructions informatiques sont exécutées sur un terminal, le terminal est activé pour exécuter le procédé d'interaction vocale selon l'une quelconque des revendications 1 à 7.

10. Système d'interaction vocale ou sur puce, comprenant une ou plusieurs unités de traitement, où, lorsque les une ou plusieurs unités de traitement exécutent des instructions, les une ou plusieurs unités de traitement exécutent le procédé d'interaction vocale selon l'une quelconque des revendications 1 à 7.
